# EUROPÄISCHE PATENTSCHRIFT

(11) **EP 1 216 862 B1**
(45) Veröffentlichungstag und Bekanntmachung des Hinweises auf die Patenterteilung: **13.05.2009**
(21) Anmeldenummer: 01126744.0
(22) Anmeldetag: 09.11.2001
(51) Int. Cl.: B60H 1/00

(54) **Einrichtung zum Steuern von Luftströmen in einer Heiz- oder Klimaanlage eines Fahrzeuges**
Arrangement for guiding a flow of air in a vehicle heating or air conditioning device
Dispositif de guidage d'écoulements d'air dans les installations de chauffage ou de climatisation de véhicule

(30) Priorität: 20.12.2000 DE 10065203
(43) Veröffentlichungstag der Anmeldung: 26.06.2002
(73) Patentinhaber: Behr GmbH & Co. KG, 70469 Stuttgart (DE)
(72) Erfinder: Denk, Walter, 71254 Ditzingen (DE); Lochmahr, Karl, Dipl.-Ing.(FH), 71665 Vaihingen (DE); Voigt, Klaus, Dipl.-Ing., 74321 Bietigheim-Bissingen (DE); Waibel, Klaus, 70806 Kornwestheim (DE)

(56) Entgegenhaltungen:
- EP-A- 0 193 794
- EP-A- 0 780 622
- FR-A- 2 743 115
- US-A- 4 625 134

## Beschreibung

Die Erfindung betrifft eine Einrichtung zum Steuern von Luftströmen in einer Heiz- oder Klimaanlage eines Kraftfahrzeuges mit einem mit mindestens einer Stellklappe versehenen Gehäuse mit Strömungskanälen und mit einer einem mit der Stellklappe über eine Antriebswelle verbundenen Getriebemotor zugewandten Außenwand gemäß dem Oberbegriff des Anspruchs 1.

Solche Heiz- oder Klimageräte sind allgemein bekannt, siehe nur zum Beispiel die FR-A-2 743 115. Die zum Antrieb der Stellklappen vorgesehenen elektrischen Getriebemotoren werden in der Regel auf Schraubdome aufgesetzt, die von der Gehäusewand des Klimagerätes abstehen und dort nach Kupplung ihrer Antriebsachse mit der Stellklappe verschraubt. Zwischen der Wand des Klimagerätes und dem Getriebemotor verbleibt daher ein gewisser Zwischenraum, der von der Abtriebswelle des Getriebemotors überbrückt wird. Eine derartige Montage elektrischer Getriebemotoren ist verhältnismäßig aufwendig.

Bei Stellklappenstelleinrichtungen von Heiz- oder Klimaanlagen, die mit unterdruckbetätigten Membranen versehen sind, ist es auch bekannt (DE 195 11 134 C1) am Gehäuse des Heizoder Klimagerätes die Gehäuseunterteile für die Stellmotoren in der Form von Schalen anzuformen und dann haubenförmige Kunststoffdeckel aufzurasten, die die Unterdruckmembran zwischen sich und dem Gehäuseunterteil einspannen. Eine solche Ausgestaltung erfordert auch eine relativ aufwendige und exakte Montage beim Aufsetzen der Gehäuseoberteile und lässt sich vor allen Dingen mit elektrischem Getriebemotoren nicht durchführen. Auch der Bauraumbedarf ist, ebenso wie bei den eingangs erwähnten Bauarten mit auf Schraubdomen aufgesetzten Servomotoren sehr groß.

Der vorliegenden Erfindung liegt die Aufgabe zugrunde, eine Einrichtung der eingangs genannten Art so auszugestalten, dass der Raumbedarf für die Anordnung der Getriebemotoren minimal ist und die Montage wesentlich vereinfacht werden kann.

Zur Lösung dieser Aufgabe werden erfindungsgemäß bei einer Einrichtung der eingangs genannten Art die Merkmale des kennzeichnenden Teils des Anspruchs 1 vorgesehen.

Durch die federnden Rastlaschen gestaltet sich die Art der Befestigung des Getriebemotors an der Außenwand äußerst einfach.

Für die Montage ist es somit lediglich notwendig, den Getriebemotor an die Außenwand anzudrücken, bis er in seiner Lage verrastet.

Um die eindeutige Lage zu sichern ist es in Weiterbildung der Erfindung vorteilhaft, den Rastlaschen Fixierrippen an der Außenwand zuzuordnen, die an das Gehäuse des Getriebemotors angepasst sind. Diese Fixierrippen können dabei beispielsweise die Gehäuseecken des Getriebemotors umfassen. Sie können aber auch in Nuten des Gehäuses des Antriebmotors eingreifen. Bei dieser Ausgestaltung wird es auch möglich, den Fixierrippen an ihrem freien Stirnende eine Gewindebohrung zuzuordnen, wobei dann auch eine Schraubbefestigung des Getriebemotors möglich wird, die beispielsweise dann notwendig werden kann, wenn in einem Reparaturfall einzelne Getriebemotoren sich gelöst haben oder gelöst werden müssen und dabei die Rastlaschen beschädigt werden. Die erneute Befestigung des Getriebemotors kann dann dennoch in einwandfreier Weise erfolgen, wobei es zweckmäßig ist, die Nuten des Gehäuses des Getriebemotors mit Abschlusslaschen mit Durchlassbohrungen zu versehen, die an die freien Stirnseiten der Fixierrippen anlegbar und von den Schrauben durchsetzbar sind.

In Weiterbildung der Erfindung kann die Abtriebswelle des Getriebemotors als Einsteckwelle ausgebildet sein und das Gehäuse des Getriebemotors durchsetzen, an ihrem von der Schwenkklappe abgewandten Ende eine Anschlagplatte und an ihrem in eine als Schwenkachse der Schwenkklappe dienenden Hohlwelle hereinragenden Ende mit einem Rastkopf versehen sein, wobei die Hohlwelle axial in dem die Schwenkklappe aufnehmenden Gehäuse gehalten ist und eine den Rastkopf aufnehmende Rastverengung aufweist.

Die Erfindung ist anhand von Ausführungsbeispielen in der Zeichnung dargestellt und wird im folgenden erläutert. Es zeigen:
- Fig. 1: eine perspektivische schematische Darstellung von nebeneinanderliegenden Strömungskanälen eines nicht näher gezeigten Heizungs- oder Klimagerätes für ein Kraftfahrzeug, bei dem in den Strömungskanälen Schwenkklappen zur Steuerung der Luftströme angeordnet sind, die durch elektrische Getriebemotoren antreibbar sind,
- Fig. 2: einen der Strömungskanäle der Fig. 1 in einer Explosionsdarstellung mit dem anzusetzenden Getriebemotor,
- Fig. 3: eine Variante der Ausgestaltung nach Fig. 2 ebenfalls in einer Explosionsdarstellung,
- Fig. 4: eine weitere Variante der Ausführungsform der Fig. 2 in einer Explosionsdarstellung,

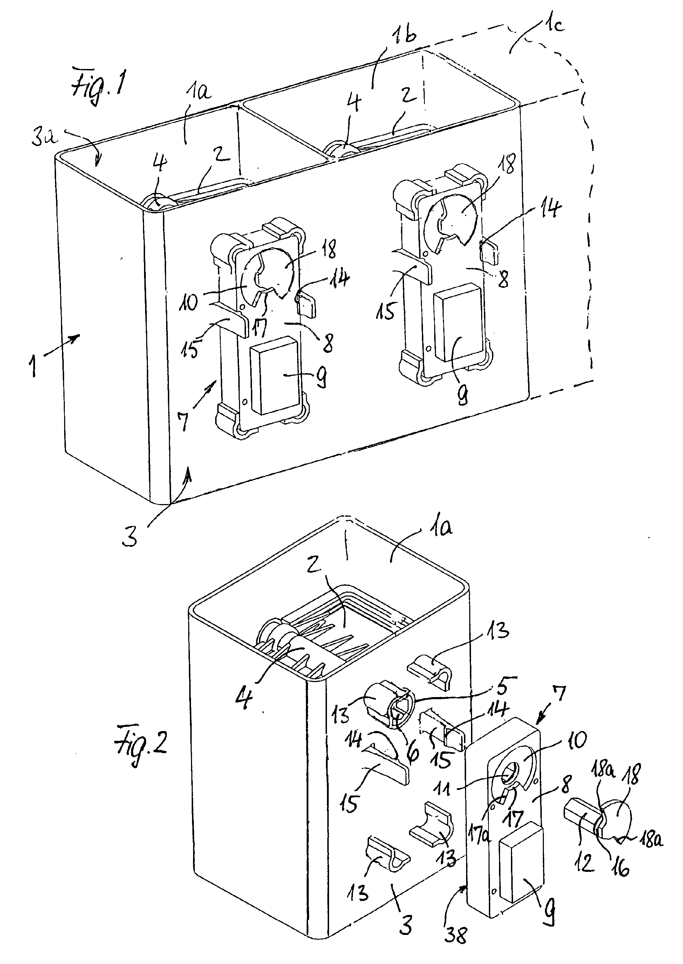

Fig. 1 zeigt zwei nebeneinander liegende Strömungskanäle 1a und 1b, die Teil eines Gehäuses 1 einer Heizungs- oder Klimaanlage eines Kraftfahrzeuges sind. Gestrichelt angedeutet ist ein weiterer Strömungskanal 1c, der, wie auch die Strömungskanäle 1a und 1b zur Steuerung von Luftströmen innerhalb des Heiz- oder Klimagerätes dient. Bekanntlich werden im Kraftfahrzeug Luftströme an verschiedene Stellen geleitet, beispielsweise zu Austrittsdüsen unterhalb der Windschutzscheibe, zu Austrittsdüsen im oberen Bereich von Fahrer- oder Beifahrerseite, zu Austrittsdüsen im Fußbereich von Fahrer und Beifahrer, oder auch in den Fondbereich des Fahrzeuges.

Um diese Luftströme, die von einem zentralen Gebläse aus gefördert werden, individuell einstellen zu können, sind die Strömungskanäle 1a, 1b - natürlich analog auch 1c usw. - mit Strömungsklappen 2 versehen, die als Schwenkklappen ausgebildet sind und um eine in gegenüberliegenden Wandungen 3 und 3a des Strömungskanales gelagerte Welle 4 schwenkbar sind. Diese Welle 4 ist beim gezeigten Ausführungsbeispiel der Fig. 1 und 2 als eine Hohlwelle ausgebildet, die drehbar in einem Lager 5 gehalten ist. Die Hohlwelle 4 ist dabei mit einem in den Fig. 2 und insbesondere 3 erkennbaren Innensechskantprofil 6 ausgerüstet. Die Schwenkbewegung der Steuerklappe 2 wird durch einen Getriebemotor 7 bewirkt, der ein quaderförmiges Gehäuse 8 aufweist, das mit einem Anschlussstecker 9 für den Anschluss eines elektrischen Versorgungskabels versehen ist. Das Gehäuse 8 enthält einen kleinen Schrittschaltmotor, der über eine Getriebe mit einem Abtriebsrad 10 in Verbindung steht, das einen zentralen, als Innensechskant ausgebildeten Steckbereich 11 für eine Sechskantwelle 12 besitzt, die gemäß Fig. 2 von außen durch das Antriebsrad 10 in den Innensechskant 6 des Lagers 5 eingeführt wird, wenn der Getriebemotor 7 in der in Fig. 1 dargestellten Lage jeweils an der Außenwand 3 angebracht ist.

Dies geschieht beim Ausführungsbeispiel dadurch, dass das quaderförmige Gehäuse 8 von außen passend zwischen vier Fixierrippen 13 eingesetzt und gegen die Wand 3 gedrückt wird, bis die Rasthaken 14 von gegenüberliegenden Rastlaschen 15 sich an der Außenseite des Gehäuses 8 verklammern und die Laschen 15 das Gehäuse 8 seitlich übergreifen. Der Getriebemotor 7 lässt sich auf diese Weise, wie Fig. 1 zeigt, in einfacher Weise von außen an die Wand 3 anclipsen. Die Abtriebswelle 12 wird dann durch das Antriebsrad 10 in den Sechskantteil 6 der Hohlwelle 4 eingeschoben, wobei sie in ihrer Montagelage, beispielsweise durch einen Rastring 16 an einer Nase 17 im Bereich des Antriebsrades 10 axial gehalten sein kann. Die Abtriebswelle 12 ist außerdem auf der von der Schwenkklappe 2 abgewandten Seite mit einer Anschlagscheibe 18 versehen, die in die angrenzend an die Nase 17 vorgesehen Aussparung hereinpasst und aufgrund ihrer Ausgestaltung zur Auschlagbegrenzung der Schwenkklappe 2 dient, indem sie mit ihren Endflächen 18a an die Begrenzungsflächen an der Nase 17 anschlägt.

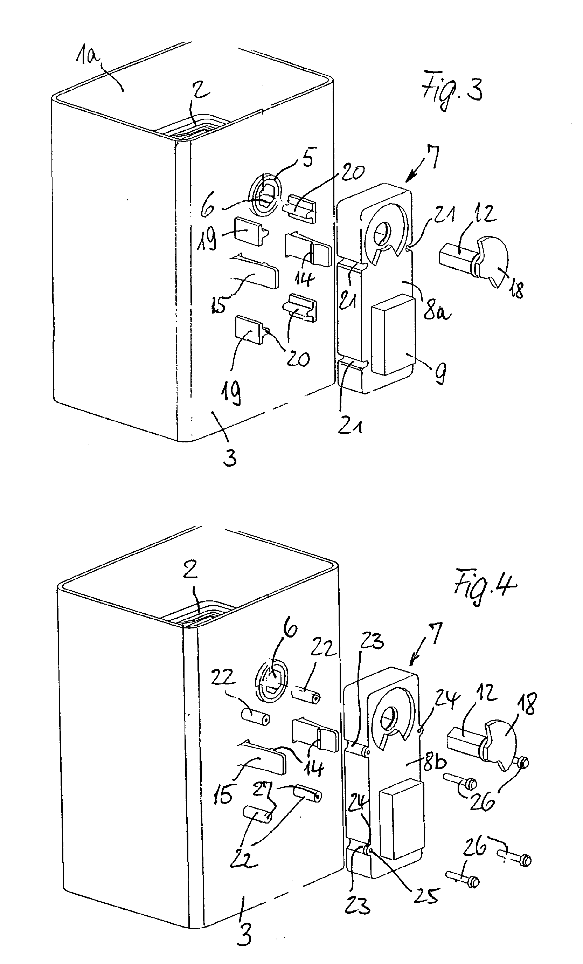

Die Fig. 3 zeigt eine Variante insofern, als hier den Rastlaschen 15, die ebenfalls mit Rasthaken 14 versehen sind, noch zusätzliche Fixierrippen 20 zugeordnet sind, die an abstehenden Zapfen 19 an der Wand 3 angebracht sind. Diese Fixierrippen 20 können in Nuten 21 eingreifen, die an den Seitenflächen des Gehäuses 8a des Getriebemotors 7 vorgesehen sind. Diese Rippen 20 sichern bei dieser Ausführungsform die Anbaulage des Getriebemotors 7, so dass Laschen wie die Laschen 13 der Fig. 2, welche die Ecken des Gehäuses 8 umgeben, nicht notwendig sind. Im übrigen entspricht der Aufbau jenem der Fig. 2.

Die Fig. 4 zeigt eine Abwandlung gegenüber Fig. 3 insofern als hier keine Rippen 20 von abstehenden Zapfen 19, sondern zylindrische Zapfen 22 den Rastlaschen 15 an der Wand 3 zugeordnet sind, deren Durchmesser der Form von Nuten 23 an den Seiten des Gehäuses 8b des Getriebemotors zugeordnet sind, wobei diese Nuten 23 auf der von der Schwenkklappe 2 abgewandten Seite des Gehäuses 8b mit Abschlusslaschen 24 versehen sind, welche sich auf die freien Enden der Zapfen 22 auflegen, wenn diese in die Nuten 23 eingeführt sind. Diese Abschlusslaschen 24 sind mit Durchlassbohrungen 25 versehen, so dass Schrauben 26 durch die Abschlusslaschen 24 hindurch und in Gewindebohrungen 27 der Zapfen 22 einführbar sind. Diese Ausgestaltung bringt den Vorteil mit sich, dass dann, wenn bei einer Reparatur, oder aus sonstigen Gründen eine der Laschen 15 beschädigt sein sollte, dennoch eine erneute Montage des Getriebemotors 7 an der Wand 3 möglich wird.

Bei allen Ausführungsformen liegt das Gehäuse des Getriebemotors 7 mit einem flachen Wandteil 38, der in den Fig. 1 bis 4 auf der vom Betrachter abgewandten Seite liegt, unmittelbar an der Gehäusewand 3 an. Der Raumbedarf für diese Antriebsanordnung ist daher minimal.

## Patentansprüche

1. Einrichtung zum Steuern von Luftströmen in einer Heiz- oder Klimaanlage eines Kraftfahrzeuges, mit einem mit mindestens einer Stellklappe (2) versehenen Gehäuse (1) mit Strömungskanälen (1a, 1 b) und mit einer einem mit der Stellklappe (2) über eine Antriebswelle (12) verbundenen Getriebemotor (7) zugewandten Außenwand (3), wobei der Getriebemotor (7) ein quaderförmiges Gehäuse (8, 8a, 8b) aufweist und auf seiner zur Stellklappe (2) weisenden Seite mit einem flachen Wandteil (38) versehen ist, der ummittelbar an der dem Getriebemotor (7) zugewandten Außenwand (3) des Gehäuses (1) angelegt und gehalten ist und zur Halterung des Getriebemotors (7) federnde Rastlaschen (15) vorgesehen sind, **dadurch gekennzeichnet, dass**
die Rastlaschen (15) an der dem Getriebemotor (7) zugewandten Außenwand (3) des Gehäuses (1) angebracht sind und die Seitenwände des quaderförmigen Gehäuses (8, 8a, 8b) des Getriebemotors übergreifen.

2. Einrichtung nach Anspruch 1, **dadurch gekennzeichnet, dass** den Rastlaschen (15) Fixierrippen (20, 22) an der dem Getriebemotor (7) zugewandten Außenwand (3) zugeordnet sind, die an das Gehäuse (8a, 8b) des Getriebemotors (7) angepasst sind.

3. Einrichtung nach Anspruch 2, **dadurch gekennzeichnet, dass** die Fixierrippen (20) in Nuten des Gehäuses (8a) des Getriebmotors (7) eingreifen.

4. Einrichtung nach Anspruch 3, **dadurch gekennzeichnet, dass** die Fixierrippen als Fixierbolzen (22) ausgebildet sind und an ihrem freien Stirnende mit einer Gewindebohrung (27) für Schrauben (26) ausgerüstet sind.

5. Einrichtung nach Anspruch 4, **dadurch gekennzeichnet, dass** die Nuten (23) des Gehäuses (8b) des Getriebemotors (7) mit Abschlusslaschen (24) mit Durchlassbohrungen (25) versehen sind, die an die freien Stirnenden der Fixierbolzen (22) anlegbar und von den Schrauben (26) durchsetzbar sind.

6. Einrichtung nach Anspruch 1, **dadurch gekennzeichnet, dass** die Abtriebswelle (12) des Getriebemotors (7) als Einsteckwelle ausgebildet ist, das Gehäuse (8d) des Getriebemotors (7) durchsetzt und, an ihrem von der Schwenkklappe (4) abgewandten Ende eine Anschlagscheibe (18) besitzt.

7. Einrichtung nach Anspruch 6, **dadurch gekennzeichnet, dass** die Anschlagscheibe (18) in eine mit einer Nase (17) versehene Aussparung hereinragt und mit in Umfangsrichtung weisenden Endflächen (18a) an die Begrenzungsflächen der Nase (17) anlegbar ist

## Claims

1. Arrangement for guiding a flow of air in a vehicle heating or air conditioning device having a housing (1) provided with at least one regulating flap (2) and comprising flow channels (1a, 1b), and having an external wall (3) facing a gear motor (7) which is connected to the regulating flap (2) by a drive shaft (12), the gear motor (7) having a rectangular-shaped housing (8a, 8a, 8b) and there being provided on the side of said housing (8a, 8a, 8b) facing the regulating flap (2) a flat section of wall (38) which lies immediately adjacent and is fixed to the external wall (3) of the housing (1) facing the gear motor (7), and sprung clip-on brackets (15) being provided for holding the gear motor (7) in place,
**characterised in that**
the clip-on brackets (15) are mounted on the external wall (3) of the housing (1) facing the gear motor and clip over the side walls of the rectangular-shaped housing (8, 8a, 8b) of the gear motor.

2. Arrangement in accordance with claim 1,
**characterised in that**
assigned to the clip-on brackets (15) and located on the external wall (3) facing the gear motor (7) are fixing ribs (20, 22) which are adapted to the housing (8a, 8b) of the gear motor (7).

3. Arrangement in accordance with claim 2,
**characterised in that**
the fixing ribs (20) engage in grooves in the housing (8a) of the gear motor (7).

4. Arrangement in accordance with claim 3,
**characterised in that**
the fixing ribs are designed as fixing bolts (22) and are provided at their free ends with a threaded hole (27) for screws (26).

5. Arrangement in accordance with claim 4,
**characterised in that**
the grooves (23) in the housing (8b) of the gear motor (7) are provided with cover plates (24) with through-holes (25) which can be positioned adjacent to the free ends of the fixing bolts (22) and through which the screws (26) can be passed.

6. Arrangement in accordance with claim 1,
**characterised in that**
the driven shaft (12) of the gear motor (7) is designed as a push-in shaft, passes through the housing (8a) of the gear motor (7) and has a stop plate (18) on the end facing away from the swivelling flap (4).

7. Arrangement in accordance with claim 6,
**characterised in that**
the stop plate (18) projects into a recess provided with a lug (17) and its peripherally facing end faces (18a) can be placed adjacent to the peripheral faces of the lug (17).

## Revendications

1. Dispositif de régulation de flux d'air dans un système de chauffage ou de climatisation d'un véhicule automobile, comprenant au moins un boîtier (1) doté d'au moins un volet de réglage (2), boîtier comportant des conduits d'écoulement (1a, 1b) et une paroi extérieure (3) tournée vers un motoréducteur (7) relié au volet de réglage (2) par un arbre d'entraînement (12), où le motoréducteur (7) présente un boîtier (8, 8a, 8b) en forme de parallélépipède rectangle et est doté, sur son côté orienté vers le volet de réglage (2), d'une partie plate (38) formant une paroi qui est en appui et fixée directement sur la paroi extérieure (3) du boîtier (1), tournée vers le motoréducteur (7), et pour la fixation du motoréducteur (7), il est prévu des pattes d'encliquetage (15) faisant ressort,
**caractérisé en ce que** les pattes d'encliquetage (15) sont fixées sur la paroi extérieure (3) du boîtier (1), tournée vers le motoréducteur (7), et s'engagent derrière les parois latérales du boîtier (8, 8a, 8b) du motoréducteur, en forme de parallélépipède rectangle.

2. Dispositif selon la revendication 1, **caractérisé en ce que** des nervures de fixation (20, 22), sur la paroi extérieure (3) tournée vers le motoréducteur (7), sont associées aux pattes d'encliquetage (15), nervures de fixation qui sont adaptées au boîtier (8a, 8b) du motoréducteur (7).

3. Dispositif selon la revendication 2, **caractérisé en ce que** les nervures de fixation (20) s'engagent dans des rainures du boîtier (8a) du motoréducteur (7).

4. Dispositif selon la revendication 3, **caractérisé en ce que** les nervures de fixation sont conçues comme des goupilles de fixation (22) et sont dotées, au niveau de leur extrémité frontale libre, d'un perçage fileté (27) pour des vis (26).

5. Dispositif selon la revendication 4, **caractérisé en ce que** les rainures (23) du boîtier (8b) du motoréducteur (7) sont dotées de pattes d'obturation (24) comprenant des perçages traversants (25), pattes d'obturation qui peuvent venir en appui sur les extrémités frontales libres des goupilles de fixation (22) et sont traversées par les vis (26).

6. Dispositif selon la revendication 1, **caractérisé en ce que** l'arbre de sortie (12) du motoréducteur (7) est conçu comme un arbre à emboîtement, traverse le boîtier (8d) du motoréducteur (7), comporte une plaque de butée (18), sur son extrémité placée à l'opposé du volet pivotant (4).

7. Dispositif selon la revendication 6, **caractérisé en ce que** la plaque de butée (18) s'engage dans un évidement doté d'un mentonnet (17) et, par des surfaces d'extrémité (18a) orientées dans la direction circonférentielle, peut venir en appui sur les surfaces de limitation du mentonnet (17).
